# FASCICULE DE BREVET EUROPEEN

(11) **EP 2 976 187 B1**
(45) Date de publication et mention de la délivrance du brevet: **24.05.2017**
(21) Numéro de dépôt: 14715343.1
(22) Date de dépôt: 06.03.2014
(51) Int. Cl.: B25J 15/06, B25J 17/02

(54) **DISPOSITIF DE MISE EN REFERENCE DU PLATEAU MOBILE PAR RAPPORT AU PLATEAU FIXE D'UNE MAIN DE PREHENSION D'UN ROBOT**
VORRICHTUNG ZUR REFERENZIERUNG DER BEWEGLICHEN PLATTE GEGENÜBER DER FIXEN PLATTE EINER GREIFERHAND EINES ROBOTERS
DEVICE FOR REFERENCING THE MOVING PLATE RELATIVE TO THE FIXED PLATE OF A GRIPPING HAND OF A ROBOT

(30) Priorité: 18.03.2013 FR 1352371
(43) Date de publication de la demande: 27.01.2016
(73) Titulaire: Peugeot Citroën Automobiles SA, 78140 Vélizy Villacoublay (FR)
(72) Inventeur: BROSSAUD, Julien, F-91160 Longjumeau (FR)
(74) Mandataire: Fosse, Danièle
(86) Numéro de dépôt international: PCT/FR2014/050517
(87) Numéro de publication internationale: WO 2014/147318

(56) Documents cités:
- FR-A1- 2 929 920
- FR-A1- 2 949 989
- JP-A- H1 058 369
- US-A- 4 778 329
- US-A1- 2003 070 272

## Description

La présente invention concerne une main de préhension d'un robot selon le préambule de la revendication 1.

Une telle main de préhension est connue du document US-A-4778329. L'invention concerne notamment la mise en référence du plateau mobile par rapport au plateau fixe de la main de préhension d'un robot qui doit être effectuée avant la mise en place du pavillon d'un véhicule automobile sur la caisse de celui-ci.

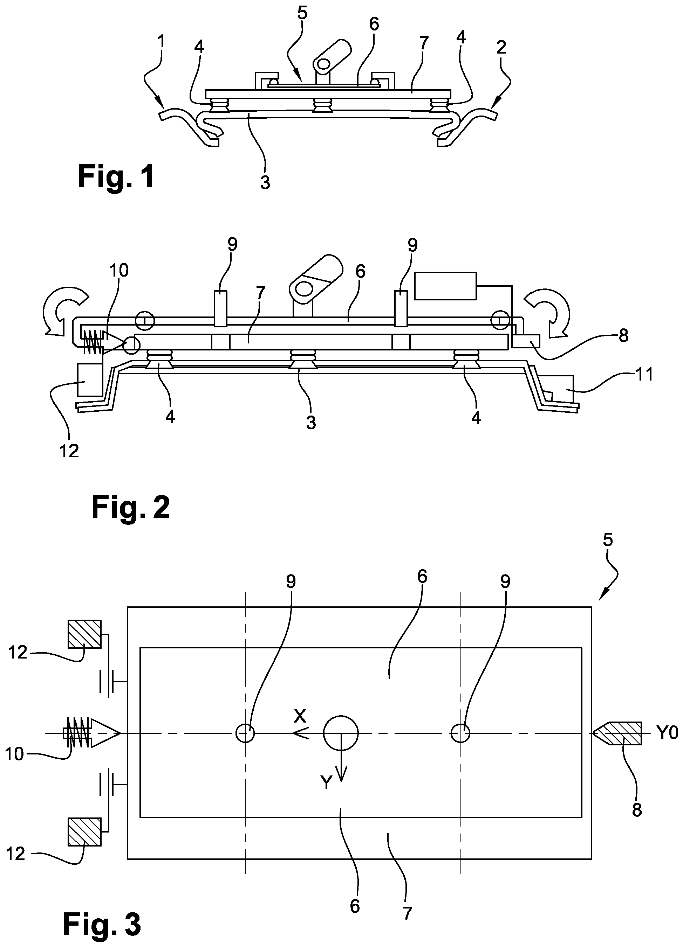

La figure 1 est une vue en coupe transversale de la partie supérieure des deux côtés d'habitacle 1, 2 de la caisse d'un véhicule automobile qui montre la mise en place entre ces deux côtés d'un pavillon 3 qui est porté au moyen de ventouses 4 par la main de préhension 5 d'un robot selon l'art antérieur. Cette main de préhension comprend un plateau fixe 6 et un plateau mobile 7.

La mise en référence évoquée plus haut est effectuée suivant les axes X, Y et Z qui correspondent respectivement aux axes longitudinal, transversal et vertical du véhicule.

Ces axes X, Y et Z sont représentés sur les figures 2 et 3.

La figure 2 est une vue analogue à la figure 1 de la main de préhension 5 portant le pavillon 3 positionné sur le haut de la caisse d'un véhicule.

La figure 3 est une vue de dessus des deux plateaux de la main de préhension.

La mise en référence X du plateau mobile 7 et du pavillon 3 sur la caisse est réalisée via la main de préhension 5 équipée d'une butée escamotable 8 fixée sur le plateau fixe 6.

La mise en référence Y du plateau mobile 7 et du pavillon 3 s'équilibre naturellement sur la caisse car les deux côtés de caisse 1, 2 forment un V, après déverrouillage de deux verrous 9 reliant les deux plateaux 6, 7 pour bloquer les degrés de liberté suivant X et Y.

La mise en référence suivant l'axe Z se fait suivant l'accostage du pavillon 3 dans le V cité plus haut des deux côtés d'habitacle et sur les deux feuillures de traverses de pavillon.

Par ailleurs, la référence 10 représente un poussoir escamotable, la référence 11 un appui fixe avec serrage et les références 12 des références de conformation de la gouttière de pavillon.

Dans un premier temps, le positionnement du pavillon est effectué au moyen d'un point de soudure dans la zone de la traverse de pavillon avant et arrière et dans un second temps, on finalise la fixation du pavillon sur la caisse par soudure laser ou plasmatron.

La problématique de la procédure ci-dessus est la suivante.

Lors de la phase d'industrialisation d'un projet, la géométrie des sous ensembles, telle que la ligne Y d'accostage sur les côtés de caisse, la largeur de la caisse suivant Y, les zones avant et arrière différentes, n'est pas encore optimisée, voire non conforme.

Dans ce cas, on peut fréquemment rencontrer des difficultés d'assemblage du pavillon sur la caisse lors de la soudure laser ou plasmatron.

Ces difficultés sont principalement dues à des problèmes de mise en place du pavillon suivant Y et Z et de mise au point non robuste, ce qui ne permet pas de garantir un accostage parfait du pavillon sur la caisse.

Ainsi dans de nombreux cas, on bloque les degrés de liberté suivant X et Y du plateau mobile 7 par rapport au plateau fixe 6, lors de la phase d'industrialisation au moyen des verrous 9, ce qui ne permet plus d'assurer la compliance du pavillon suivant Y et la position de celui-ci est de ce fait directement réalisée par la trajectoire de dépose du robot.

Cependant, cette pratique de blocage via les verrous 9 est en interaction avec le dispositif de mise en référence par la butée 8 et le poussoir 10.

Par ailleurs, le dispositif ci-dessus augmente significativement la masse de la main de préhension portée par le robot.

Le but de la présente invention est de remédier aux inconvénients ci-dessus.

Ce but est atteint, selon l'invention grâce à une main de préhension de robot comprenant un plateau mobile par rapport à un plateau fixe et comprenant un dispositif de mise en référence du plateau mobile par rapport au plateau fixe, ce dispositif comprenant deux verrous mobiles en translation dans une direction perpendiculaire aux deux plateaux entre une première position déverrouillée dans laquelle l'un des plateaux est libre par rapport à l'autre plateau et une deuxième position verrouillée dans laquelle une partie de chaque verrou est engagée sensiblement sans jeu dans un évidement d'un plateau et bloque le déplacement de ce plateau, caractérisée en ce que chacun des deux verrous comporte une autre partie présentant une section différente de celle de la première partie, cette autre partie pouvant s'engager avec jeu dans ledit évidement lorsque le verrou est dans une troisième position, de telle sorte que le jeu entre cette autre partie et l'évidement du plateau permette à celui-ci de se déplacer avec un certain degré de liberté suivant une direction Y perpendiculaire à la direction Z et d'être bloqué dans une direction X perpendiculaire à la direction Y et à la direction Z. Ainsi, le dispositif selon l'invention permet plusieurs combinaisons de mise en référence du plateau mobile par rapport au plateau fixe suivant les axes X, Y selon la position de chacun des deux verrous suivant la direction Z, de façon à autoriser plusieurs configurations possibles pour la mise en référence d'une pièce, telle qu'un pavillon sur la caisse d'un véhicule automobile.

Par ailleurs, le dispositif selon l'invention permet la suppression de la butée 8 et du poussoir 10 ainsi que des moyens pneumatique et mécanique associés, ce qui permet une réduction des coûts et une réduction de la masse et de ce fait une réduction de temps de cycle.

Dans une version préférée de l'invention, ladite première partie est située en amont de l'autre partie relativement au sens de déplacement du verrou vers la position verrouillée.

Dans un mode de réalisation de l'invention, chacun des évidements réalisés dans l'un des plateaux est de section carrée.

La première partie de chaque verrou peut être de section circulaire et son diamètre peut être sensiblement égal au côté du carré de la section de l'évidement pour pouvoir s'inscrire sensiblement sans jeu dans cet évidement.

Ladite autre partie de chaque verrou peut être de section sensiblement en forme de losange dont la longueur est sensiblement égale au côté du carré de la section de l'évidement et la largeur est inférieure audit côté du carré.

Cette autre partie en forme de losange peut ainsi se déplacer dans l'évidement carré avec un certain jeu, dans le sens de la largeur du losange.

De préférence, l'axe de ladite partie en forme de losange est centré sur l'axe de ladite partie de section circulaire.

Dans un mode de réalisation particulier de l'invention, les évidements sont réalisés dans le plateau mobile et les verrous sont montés mobiles en translation vers le plateau mobile dans le plateau fixe.

De préférence également, les deux verrous sont espacés l'un de l'autre dans le sens de la longueur du plateau sur lequel ils sont montés en translation.

Dans une version particulièrement avantageuse de l'invention, chacun desdits verrous est mobile entre une première position, dans laquelle le verrou est libre par rapport à l'évidement du plateau mobile, une deuxième position, dans laquelle la partie de section circulaire est engagée dans l'évidement et une troisième position, dans laquelle la partie de section en forme de losange est engagée dans l'évidement.

Selon un autre aspect, l'invention concerne également un robot dont la main de préhension est équipée d'un dispositif de mise en référence selon l'invention.

D'autres particularités et avantages de l'invention apparaîtront encore tout au long de la description ci-après.

Aux dessins annexés, donnés à titre d'exemples, non limitatifs :
- la figure 1 est une vue en coupe transversale de la partie supérieure des deux côtés d'habitacle de la caisse d'un véhicule automobile avec une main de préhension d'un robot selon l'état de la technique,
- la figure 2 est une vue analogue à la figure 1,
- La figure 3 est une vue de dessus des deux plateaux de la main de préhension de la figure 1,

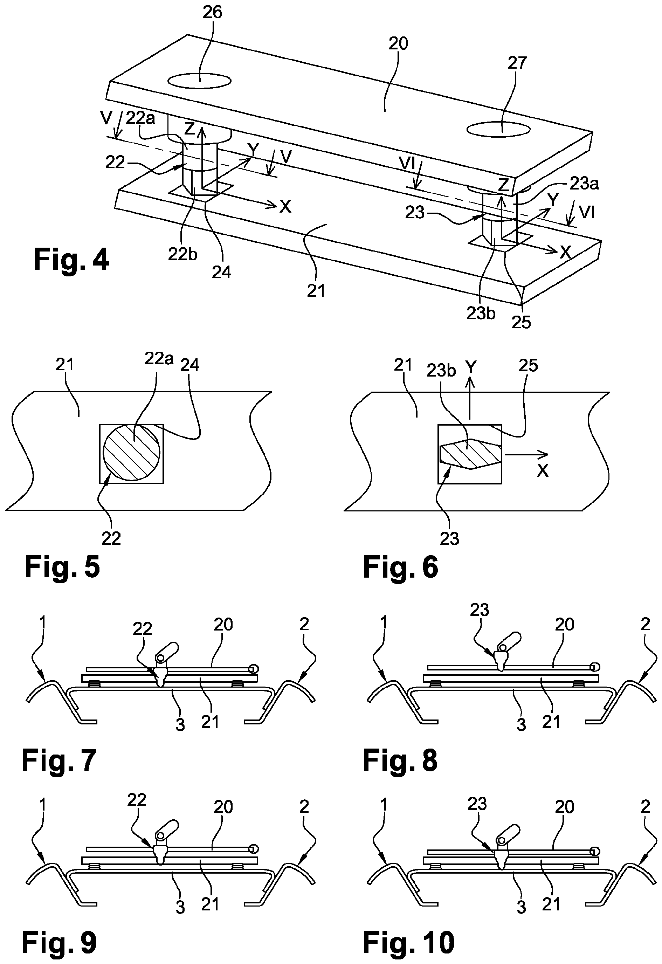

- la figure 4 est une vue en perspective montrant les deux plateaux et les deux verrous du dispositif de mise en référence selon l'invention,
- la figure 5 est une vue en coupe suivant le plan V-V de la figure 4,
- la figure 6 est une vue en coupe suivant le plan VI-VI de la figure 4,
- les figures 7 à 14 sont des vues en coupe longitudinale d'une main de préhension équipée d'un dispositif selon l'invention portant un pavillon en position sur la caisse d'un véhicule, montrant les différentes positions des verrous du dispositif.

La figure 4 représente schématiquement le plateau fixe 20 et le plateau mobile 21 de la main de préhension d'un robot.

Ces deux plateaux 20, 21 comportent un dispositif de mise en référence comprenant deux verrous 22, 23 mobiles en translation dans une direction Z perpendiculaire aux deux plateaux 20, 21 entre une première position déverrouillée dans laquelle l'un 21 des plateaux est libre par rapport à l'autre plateau 20 et une deuxième position verrouillée dans laquelle (voir figure 5) une partie 22a, 23a de chaque verrou 22, 23 est engagée sensiblement sans jeu dans un évidement 24, 25 du plateau 21 et bloque le déplacement de ce plateau 21 par rapport au plateau 20.

Conformément à l'invention, chacun des deux verrous 22, 23 comporte une autre partie 22b, 23b présentant une section différente de celle de la première partie 22a, 23a, cette autre partie 22b, 23b pouvant s'engager avec jeu dans l'évidement 24, 25, comme montré sur la figure 6, lorsque le verrou 22, 23 est dans une troisième position.

Dans cette troisième position, le jeu entre cette autre partie 22b ou 23b et l'évidement 25 du plateau 21 permet à celui-ci de se déplacer avec un certain degré de liberté suivant une direction Y perpendiculaire à la direction Z et d'être bloqué dans une direction X perpendiculaire à la direction Y.

Dans l'exemple représenté sur la figure 4, les parties 22a, 23a ; 22b, 23b sont réalisées d'une seule pièce avec le reste de chacun des verrous 22, 23.

De plus, chacun des verrous 22, 23 est monté mobile suivant Z dans une ouverture circulaire 26, 27 réalisée dans le plateau fixe 20.

Par ailleurs, la première partie 22a, 23a des verrous 22, 23 est située en amont de l'autre partie 22b, 23b relativement au sens de déplacement du verrou vers la position verrouillée dans le plateau mobile 21.

Les figures 4 et 5 montrent en outre que chacun des évidements 24, 25 est de section carrée.

Comme montré sur la figure 5, la première partie 22a, 23a des verrous 22, 23 est de section circulaire et son diamètre est sensiblement égal au côté du carré de la section de l'évidement 24.

La figure 6 montre que l'autre partie 22b, 23b est de section sensiblement en forme de losange dont la longueur est sensiblement égale au côté du carré de la section de l'évidement 25 et la largeur est inférieure à ce côté du carré.

Ainsi, lorsque la partie 23b ou 22b est engagée dans l'évidement 24 ou 25, il existe un jeu entre la partie 23b (ou 22b) du verrou et l'évidement 25 (ou 24) qui donne au plateau mobile 21 un certain degré de liberté dans la direction Y.

La figure 4 montre également que la partie en forme de losange 22b ou 23b est centrée sur l'axe de la partie de section circulaire 22a ou 23a.

Dans l'exemple représenté, les évidements 24, 25 sont réalisés dans le plateau mobile 21 et les verrous 22, 23 sont montés mobiles en translation vers le plateau mobile 21 dans le plateau fixe 20.

Cependant, les évidements 24, 25 pourraient être réalisés dans le plateau fixe et les verrous 22, 23 pourraient être montés dans le plateau mobile.

Par ailleurs, les deux verrous 22, 23 sont espacés l'un de l'autre dans le sens X de la longueur du plateau 21 sur lequel ils sont montés en translation.

Il ressort donc de la description ci-dessus que chacun des verrous 22, 23 est monté mobile suivant l'axe Z entre les trois positions suivantes :
- une première position, dans laquelle le verrou 22 ou 23 est libre par rapport à l'évidement 24, 25 du plateau mobile, de sorte que celui-ci peut se déplacer librement suivant X et Y ;
- une deuxième position, dans laquelle la partie de section circulaire 22a ou 23a est engagée dans l'évidement 24, 25 et
- une troisième position, dans laquelle la partie de section en forme de losange 22b ou 23b est engagée dans l'évidement 24 ou 25.

Dans la deuxième position, le plateau mobile 21 est bloqué.

Dans la troisième position, le plateau 21 a un certain degré de liberté suivant Y, mais est bloqué suivant X.

Les figures 7 à 14 sont des vues en coupe longitudinale de l'ensemble plateau fixe 20 et plateau mobile 21 portant un pavillon 3 positionné entre la partie supérieure des deux côtés d'habitacle 1, 2 de la caisse d'un véhicule automobile.

Les figures de gauche, c'est-à-dire les figures 7, 9, 11 et 13 montrent diverses positions du verrou 22 et les figures de droite, c'est-à-dire les figures 8, 10, 12 et 14 montrent diverses positions du verrou 23.

Les diverses positions des verrous 22 et 23 sont les suivantes :
- verrou complètement escamoté : position 0
- verrou partiellement engagé : position 1
- verrou complètement engagé : position 2

Dans la première configuration représentée sur les figures 7 et 8 :
- le verrou 22 est en position 2 et
- le verrou 23 est en position 0.

De ce fait, le degré de liberté XY est bloqué à l'avant et aucun degré de liberté n'est bloqué à l'arrière.

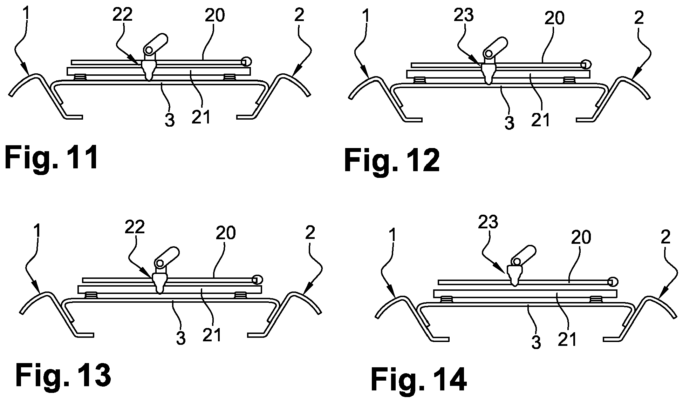

Dans la deuxième configuration représentée sur les figures 9 et 10 :
- le verrou 22 est en position 1 : le degré de liberté X est bloqué à l'avant,
- le verrou 23 est en position 2 : le degré de liberté XY est bloqué à l'arrière. Dans la troisième configuration représentée sur les figures 11 et 12 :
- le verrou 22 est en position 2 : le degré de liberté XY est bloqué à l'avant,
- le verrou 23 est en position 2 : le degré de liberté XY est bloqué à l'arrière. Dans la quatrième configuration représentée sur les figures 13 et 14 :
- le verrou 22 est en position 1 : le degré de liberté X est bloqué à l'avant,
- le verrou 23 est en position 0 : aucun degré de liberté n'est bloqué à l'arrière.

Par conséquent, le dispositif selon l'invention permet plusieurs configurations possibles pour la mise en référence du pavillon 3 sur la caisse du véhicule selon la phase du projet de véhicule, à savoir le début du projet, la fin de la phase d'industrialisation et la fabrication en série.

L'invention permet également de réduire les impacts de la géométrie des pièces sur la mise au point de l'assemblage du pavillon sur la caisse.

En outre, la suppression de la butée 8 et du poussoir 10 du dispositif connu (voir figures 2 et 3) et des moyens mécaniques et pneumatiques associés permet un gain sur investissement et un gain de poids de l'ordre de 2 kg, ce qui permet de réduire le temps de réponse de l'automatisme, l'inertie du robot et par conséquent une réduction de temps de cycle.

## Revendications

1. Main de préhension de robot comprenant un plateau mobile (21) par rapport à un plateau fixe (20), et comprenant un dispositif de mise en référence du plateau mobile (21) par rapport au plateau fixe (20), ce dispositif comprenant deux verrous (22, 23) mobiles en translation dans une direction perpendiculaire aux deux plateaux (20, 21) entre une première position déverrouillée dans laquelle l'un (21) des plateaux est libre par rapport à l'autre plateau (20) et une deuxième position verrouillée dans laquelle une partie (22a, 23a) de chaque verrou (22, 23) est engagée sensiblement sans jeu dans un évidement (24, 25) d'un plateau (21) et bloque le déplacement de ce plateau, **caractérisée en ce que** chacun des deux verrous (22, 23) comporte une autre partie présentant une section différente de celle de la première partie (22a, 23a), cette autre partie pouvant s'engager avec jeu dans ledit évidement (24, 25) lorsque le verrou est dans une troisième position, de telle sorte que le jeu entre cette autre partie (22b, 23b) et l'évidement (24, 25) du plateau permette à celui-ci de se déplacer avec un certain degré de liberté suivant une direction Y perpendiculaire à la direction Z et d'être bloqué dans une direction X perpendiculaire à la direction Y et à la direction Z.

2. Main de préhension selon la revendication 1, **caractérisée en ce que** ladite première partie (22a, 23a) est située en amont de l'autre partie (22b, 23b) relativement au sens de déplacement du verrou (22, 23) vers la position verrouillée.

3. Main de préhension selon l'une des revendications 1 ou 2, **caractérisée en ce que** chacun desdits évidements (24, 25) est de section carrée.

4. Main de préhension selon la revendication 3, **caractérisée en ce que** ladite première partie (22a, 23a) est de section circulaire et son diamètre est sensiblement égal au côté du carré de la section de l'évidement (24, 25).

5. Main de préhension selon l'une des revendications 3 ou 4, **caractérisée en ce que** ladite autre partie (22b, 23b) est de section sensiblement en forme de losange dont la longueur est sensiblement égale au côté du carré de la section de l'évidement (24, 25) et la largeur est inférieure audit côté du carré.

6. Main de préhension selon la revendication 5, **caractérisée en ce que** l'axe de ladite partie (22b, 23b) sensiblement en forme de losange est centré sur l'axe de ladite partie (22a, 23a) de section circulaire.

7. Main de préhension selon l'une des revendications 1 à 6, **caractérisée en ce que** lesdits évidements (24, 25) sont réalisés dans le plateau mobile (21) et les verrous (22, 23) sont montés mobiles en translation vers le plateau mobile (21) dans le plateau fixe (20).

8. Main de préhension selon l'une des revendications 1 à 7, **caractérisée en ce que** les deux verrous (22, 23) sont espacés l'un de l'autre dans le sens de la longueur du plateau (20) sur lequel ils sont montés en translation.

9. Main de préhension selon l'une des revendications 5 ou 6, **caractérisée en ce que** chacun desdits verrous (22, 23) est mobile entre une première position, dans laquelle le verrou (22, 23) est libre par rapport à l'évidement (24, 25) du plateau mobile (21), une deuxième position, dans laquelle la partie (22a, 23a) de section circulaire est engagée dans l'évidement (24, 25) et une troisième position, dans laquelle la partie (22b, 23b) de section en forme de losange est engagée dans l'évidement (24, 25).

10. Robot équipé d'une main de préhension selon l'une des revendications 1 à 9.

## Patentansprüche

1. Greifhand eines Roboters, eine im Verhältnis zu einer feststehenden Platte (20) mobile Platte (21) umfassend, und eine Vorrichtung zum Referenzieren der mobilen Platte (21) im Verhältnis zur feststehenden Platte (20) umfassend, wobei diese Vorrichtung zwei Riegel (22, 23) umfasst, die in eine Richtung Z, senkrecht zu den beiden Platten (20, 21) zwischen einer ersten entriegelten Position, in der die eine (21) der Platten im Verhältnis zur anderen Platte (20) frei ist, und einer zweiten verriegelten Position verschiebbar ist, in der ein Teil (22a, 23a) eines jeden Riegels (22, 23) in etwa spielfrei in eine Ausnehmung (24, 25) einer Platte (21) eingeführt ist, und die Bewegung dieser Platte blockiert, **dadurch gekennzeichnet, dass** jeder der beiden Riegel (22, 23) einen anderen Teil umfasst, der einen anderen Querschnitt als jenen des ersten Teils (22a, 23a) aufweist, wobei dieser andere Teil mit Spiel in die besagte Ausnehmung (24, 25) eingeführt werden kann, wenn sich der Riegel in einer dritten Position befindet, sodass das Spiel zwischen diesem anderen Teil (22b, 23b) und der Ausnehmung (24, 25) der Platte es dieser ermöglicht, sich mit einem bestimmten Freiheitsgrad entsprechend einer Richtung Y, senkrecht zur Richtung Z zu bewegen, und in einer Richtung X, senkrecht zur Richtung Y und zur Richtung Z blockiert zu werden.

2. Greifhand nach Anspruch 1, **dadurch gekennzeichnet, dass** sich der besagte erste Teil (22a, 23a) in Bezug auf die Bewegungsrichtung des Riegels (22, 23) in die verriegelte Position vor dem anderen Teil (22b, 23b) befindet.

3. Greifhand nach einem der Ansprüche 1 oder 2, **dadurch gekennzeichnet, dass** jede der besagten Ausnehmungen (24, 25) einen quadratischen Querschnitt aufweist.

4. Greifhand nach Anspruch 3, **dadurch gekennzeichnet, dass** der besagte erste Teil (22a, 23a) einen kreisförmigen Querschnitt aufweist und sein Durchmesser in etwa gleich der Seite des Quadrats des Querschnitts der Ausnehmung (24, 25) ist.

5. Greifhand nach einem der Ansprüche 3 oder 4, **dadurch gekennzeichnet, dass** der besagte andere Teil (22b, 23b) einen Querschnitt in etwa in Form einer Raute aufweist, deren Länge in etwa gleich der Seite des Quadrats des Querschnitts der Ausnehmung (24, 25) ist, und die Breite kleiner ist, als die besagte Seite des Quadrats.

6. Greifhand nach Anspruch 5, **dadurch gekennzeichnet, dass** die Achse des besagten Teils (22b, 23b), das in etwa die Form einer Raute aufweist auf der Achse des besagten Teils (22a, 23a) im kreisförmigen Querschnitt zentriert ist.

7. Greifhand nach einem der Ansprüche 1 bis 6, **dadurch gekennzeichnet, dass** die besagten Ausnehmungen (24, 25) auf der mobilen Platte (21) ausgeführt sind und die Riegel (22, 23) zur mobilen Platte (21) verschiebbar auf der feststehenden Platte (20) montiert sind.

8. Greifhand nach einem der Ansprüche 1 bis 7, **dadurch gekennzeichnet, dass** die beiden Riegel (22, 23) in Richtung der Länge der Platte (20), auf der sie verschiebbar montiert sind, im Abstand zueinander angeordnet sind.

9. Greifhand nach einem der Ansprüche 5 oder 6, **dadurch gekennzeichnet, dass** jeder der besagten Riegel (22, 23) zwischen einer ersten Position, in der der Riegel (22, 23) im Verhältnis zur Ausnehmung (24, 25) der mobilen Platte (21) frei ist, einer zweiten Position, in der der Teil (22a, 23a) mit dem kreisförmigen Querschnitt in die Ausnehmung (24, 25) eingeführt ist, und einer dritten Position verschoben werden kann, in der der Teil (22b, 23b) mit dem Querschnitt in Form einer Raute in die Ausnehmung (24, 25) eingeführt ist.

10. Roboter, der mit einer Greifhand nach einem der Ansprüche 1 bis 9 ausgerüstet ist.

## Claims

1. Robot gripping hand comprising a plate (21) able to move with respect to a fixed plate (20), and comprising a device for referencing the movable plate (21) with respect to the fixed plate (20), this device comprising two bolts (22, 23) able to move in translation in a direction Z perpendicular to the two plates (20, 21) between a first unlocked position in which one (21) of the plates is free with respect to the other plate (20) and a second locked position in which a part (22a, 23a) of each bolt (22, 23) is engaged substantially without clearance in a recess (24, 25) in a plate (21) and blocks the movement of this plate, **characterised in that** each of the two bolts (22, 23) comprises another part having a cross section different from that of the first part (22a, 23a), this other part being able to engage with clearance in said recess (24, 25) when the bolt is in a third position, so that the clearance between this other part (22b, 23b) and the recess (24, 25) in the plate allows the latter to move with a certain degree of freedom in a direction Y perpendicular to the direction Z and to be blocked in a direction X perpendicular to the direction Y and to the direction Z.

2. Gripping hand according to claim 1, **characterised in that** said first part (22a, 23a) is situated upstream of the other part (22b, 23b) in relation to the direction of movement of the bolt (22, 23) towards the locked position.

3. Gripping hand according to either claim 1 or 2, **characterised in that** each of said recesses (24, 25) has a square cross section.

4. Gripping hand according to claim 3, **characterised in that** said first part (22a, 23a) has a circular cross section and its diameter is substantially equal to the side of the square of the cross section of the recess (24, 25).

5. Gripping hand according to either claim 3 or 4, **characterised in that** said other part (22b, 23b) has a cross section substantially in a diamond shape, the length of which is substantially equal to the side of the square of the cross section of the recess (24, 25) and the width of which is less than said side of the square.

6. Gripping hand according to claim 5, **characterised in that** the axis of said part (22b, 23b) substantially in a diamond shape is centred on the axis of said part (22a, 23a) with a circular cross section.

7. Gripping hand according to any of claims 1 to 6, **characterised in that** said recesses (24, 25) are produced in the movable plate (21) and the bolts (22, 23) are mounted so as to be able to move in translation towards the movable plate (21) in the fixed plate (20).

8. Gripping hand according to any of claims 1 to 7, **characterised in that** the two bolts (22, 23) are spaced apart from each other in the direction of the length of the plate (20) on which they are mounted in translation.

9. Gripping hand according to any either claim 5 or claim 6, **characterised in that** each of said bolts (22, 23) is able to move between a first position in which the bolt (22, 23) is free with respect to the recess (24, 25) in the movable plate (21), a second position in which the part (22a, 23a) with a circular cross section is engaged in the recess (24, 25) and a third position in which the part (22b, 23b) with a cross section in a diamond shape is engaged in the recess (24, 25).

10. Robot equipped with a gripping hand according to any of claims 1 to 9.
